(19)

Europäisches
Patentamt

European
Patent Office

Office européen
des brevets

(11) **EP 4 567 726 B1**

(12) **EUROPEAN PATENT SPECIFICATION**

(45) Date of publication and mention
of the grant of the patent:
**24.12.2025 Bulletin 2025/52**

(21) Application number: **24212177.0**

(22) Date of filing: **11.11.2024**

(51) International Patent Classification (IPC):
*G06T 7/00* (2017.01)   *G06T 7/12* (2017.01)
*G06T 7/194* (2017.01)   *G06T 7/62* (2017.01)

(52) Cooperative Patent Classification (CPC):
**G06T 7/0004; G06T 7/12; G06T 7/194; G06T 7/62;**
G06T 2207/20081; G06T 2207/20084;
G06T 2207/30164

(54) **DETERMINING PROPERTIES ASSOCIATED WITH SHROUD GAPS**

BESTIMMUNG DER EIGENSCHAFTEN IM ZUSAMMENHANG MIT MANTELLÜCKEN

DÉTERMINATION DE PROPRIÉTÉS ASSOCIÉES À DES ESPACES DE CARÉNAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.12.2023 GB 202318750**

(43) Date of publication of application:
**11.06.2025 Bulletin 2025/24**

(73) Proprietor: **Rolls-Royce plc**
**London N1 9FX (GB)**

(72) Inventors:
• **Nasser, Bilal**
**Derby, DE24 8BJ (GB)**
• **Pulisciano, Adriano**
**Derby, DE24 8BJ (GB)**
• **Flint, Paul**
**Derby, DE24 8BJ (GB)**
• **Wedekind, Jan**
**Derby, DE24 8BJ (GB)**
• **Shaukat, Affan**
**Derby, DE24 8BJ (GB)**

(74) Representative: **Rolls-Royce plc**
**Moor Lane (ML-9)**
**PO Box 31**
**Derby DE24 8BJ (GB)**

(56) References cited:
EP-B1- 3 324 150    WO-A1-2022/087617
JP-A- 2009 019 590

**Description**

TECHNOLOGICAL FIELD

The present disclosure concerns methods and apparatus for determining one or more properties associated with at least one shroud gap of a turbine.

BACKGROUND

In some examples, an inspection may be carried out in relation to a physical (e.g. mechanical) component.

For example, an aircraft typically comprises one or more engines for providing propulsive thrust and/or electrical energy to the aircraft. During operation, the one or more engines may become damaged (for example, due to relatively high operating temperatures or due to foreign object damage or corrosion or the like). Aircraft engines are generally inspected at regular intervals by a human inspector to determine the condition of components within the engine. Where components are found to be in an unacceptable condition, the engine may be removed from the aircraft for repair. During such inspections, the aircraft is grounded and is not available for operation. Additionally, the quality and duration of the inspection is dependent upon the skill and experience of the inspector.

Aircraft and other components may comprise turbines, which may include a plurality of blades. In some designs, the tips of turbine blades comprise shrouds, which control airflow leakages and/or reduce vibrations. Such shrouds may become damaged in use, which may in turn impact the efficiency, performance and in some cases safety of the turbine and/or engine.

The document with the number EP3324150 discloses the measurement of shroud gaps of shrouded turbine blades, where the shrouds are adjacent to each other.

BRIEF SUMMARY

According to a first aspect there is provided a computer-implemented method for determining one or more properties associated with at least one shroud gap of a turbine, wherein a shroud gap is a gap between adjacent shrouds of the turbine. The method comprises obtaining a plurality of image frames of shroud gaps of the turbine, wherein the turbine is in a different orientation (relative to an image capture device) in each of the image frames, and a first reference image of a first shroud gap in a first orientation. For each of a plurality of shroud gaps, the method further comprises identifying an image frame in which an orientation of the shroud gap matches the first orientation. Image processing is performed on the identified image frames to identify a first region of that image frame associated with a shroud gap. The identified regions of the image frames are combined to obtain a gap mask. The gap mask is applied to each identified image frame to identify a second region, and image processing is performed on the second region to determine the one or more property associated with the at least one shroud gap.

The one or more property may for example comprise a measurement of the shroud gap, or of a defect such as a chip or a hole in the one or more shrouds.

In some examples, obtaining the gap mask comprises identifying a region of the average image frame that represent an average shroud gap plus, in some examples, a surrounding margin. The margin may ensure that the second region encompasses image features such as shroud edges.

Identifying an image frame in which an orientation of the shroud gap matches the first orientation may be carried out using image processing based on the first reference image. In other examples, identifying the image frame in which the orientation of the shroud gap matches the first orientation may comprise using a position measuring apparatus which directly measures the position of a shroud gap when an image is captured. In other examples, an image may be associated with data indicative that the shroud was in a particular orientation (e.g. the first orientation) when the image was acquired.

In some examples, combining the identified regions of the image frames comprises determining an average gap mask. In some examples, applying the gap mask to an identified image frame comprises carrying out a logical AND operation between the first region and the gap mask.

Performing image processing on the second region to determine the one or more properties associated with the at least one shroud gap may, in some examples, comprise receiving data comprising three-dimensional (3D) data representing a geometry of at least part of the turbine; determining a two-dimensional (2D) to 3D mapping between the reference image and the 3D data, wherein locations in the reference image are mapped to locations in 3D space; determining a 2D to 2D mapping between the image frame and the reference image; and determining a measurement of a property of the shroud gap using the 2D to 2D and the 2D to 3D mappings.

Performing image processing on the identified image frames to identify the first region may comprise using a first machine learning model to classify portions of the identified image frame that comprise one or both of a background (for example, an engine liner visible behind the shrouds) and the shroud gap as the first region of that image frame. The region of the image which comprises the shroud gap may be a portion of the image which captures a background behind the shroud, which may again comprise an image of an engine liner. The first machine learning model may for example comprise a convolutional neural network.

In some examples, combining the identified regions of the image frames to obtain a gap mask comprises averaging over the first regions of the identified image frames to obtain an average image frame comprising the background and shroud gap, using a second machine learning model to classify portions of the average image frame that comprise shroud gap, and identifying the gap mask as corresponding to the portions of the average image frame that represent a shroud gap or an average shroud gap (plus, in some examples, a surrounding margin). In other examples, the second machine learning model may classify portions of each image frame that comprise shroud gap before determining the average image frame. The second machine learning model may for example comprise a convolutional neural network.

In some examples, the method comprises capturing, by a camera, the image frames by imaging into the first shroud gap. In some examples, when in the first orientation, the first shroud gap is horizontal relative to a camera capturing the image frames. In some examples, the camera captures video, and the image frames are extracted therefrom.

In some examples, performing image processing on the second region to determine the one or more properties associated with at least one shroud gap comprises performing a polynomial fit (e.g. parabola fitting) on the second region to identify shroud holing. For example, this may identify an expected edge or contour, and departures therefrom may be indicative of shroud holing.

The one or more properties associated with at least one shroud gap may comprise a cumulative shroud holing area for the turbine, wherein shroud holing is a hole that passes through the shroud completely. This may be indicative of a level of damage sustained by the component. In some examples, the method comprises determining an area of shroud holing for each identified image frame and summing the determined area of shroud holing for each identified image frame to obtain the cumulative shroud holing area for the turbine.

The one or more properties associated with at least one shroud gap may comprise a maximum shroud gap of the turbine, wherein the maximum shroud gap is a longest orthogonal distance between nearest edges of any two adjacent shrouds of the turbine. In some such examples, performing image processing on the second region to determine the one or more properties associated with at least one shroud gap comprises identifying a maximum shroud gap for the identified image frame by applying a max-min filter to the second region. A max-min filter can operate as an edge detection filter and operates by replacing a pixel value of a central pixel of an operating window with a value equal to the difference of the maximum and minimum pixel values in the operating window. In some such examples, the method may further comprise comparing the maximum shroud gap for each identified image frame to obtain the maximum shroud gap of the turbine.

In some examples, responsive to determining that at least one of the one or more properties associated with the at least one shroud gap of the turbine fails to satisfy a corresponding criterion, the method may include determining that the turbine requires servicing. In some examples, responsive to determining that at least one of the one or more properties associated with the at least one shroud gap of the turbine fails to satisfy a corresponding criterion, the method may comprise issuing an indication to a user. In other examples, an indication may be provided that the turbine meets the criterion, or that the turbine has reached an end of its operational life, or the like.

According to a second aspect there is provided an apparatus comprising processor circuitry. The processor circuitry is configured to receive data comprising a plurality of image frames of a plurality of shroud gaps of a turbine, wherein the turbine is in a different orientation in each of the image frames, and a first reference image of a first shroud gap in a first orientation, and for each of the plurality of shroud gaps, identify an image frame in which the shroud gap matches the first orientation. The processor circuitry is further configured to perform image processing on the identified image frame to identify a first region of the image frame associated with a shroud gap, combine the identified regions of the image frames to obtain a gap mask, and to apply the gap mask to each identified image frame to identify a second region. The processor circuitry is further configured to determine one or more properties associated with at least one shroud gap based on the second region.

According to a third aspect there is provided a non-transitory computer readable storage medium as defined in claim 15.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

BRIEF DESCRIPTION

Embodiments will now be described by way of example only, with reference to the Figures, in which:

Fig. 1 illustrates a schematic diagram of an apparatus for inspection of a turbine according to various embodiments;
Fig. 2 illustrates an engine comprising turbines which may be inspected according to various embodiments;
Fig. 3 is a schematic illustration of part of a turbine according to some embodiments;

Fig. 4 is a schematic illustration of two adjacent shrouds of a turbine which form a shroud gap according to some embodiments;

Fig. 5 is a flow diagram illustrating a computer-implemented method for determining one or more properties of a shroud gap of a turbine according to some embodiments;

Fig. 6A-D schematically illustrate steps of the method according to some embodiments;

Figs. 7 and 8 are flow diagrams illustrating computer-implemented methods for use in determining one or more properties of a shroud gap of a turbine according to some embodiments;

Fig. 9 is a schematic diagram of an apparatus comprising processor circuitry according to some embodiments; and

Fig. 10 is a schematic diagram of a machine-readable medium in communication with a processor according to some embodiments.

## DETAILED DESCRIPTION

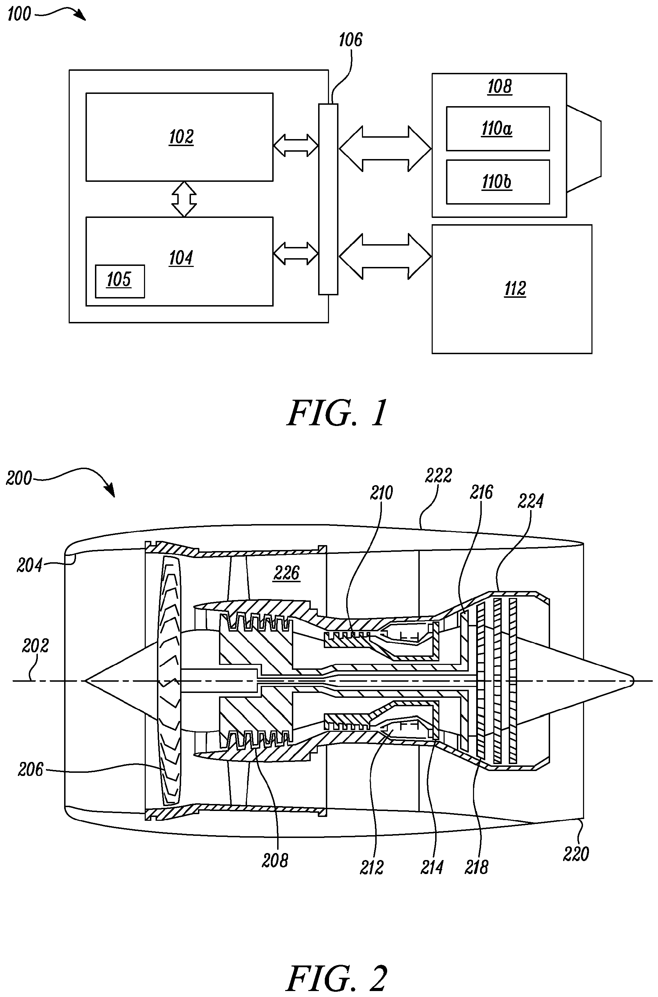

**Fig. 1** shows an example of an apparatus 100 which may be used for inspecting a component such as a turbine. The apparatus 100 comprises processor circuitry 102, a machine-readable memory 104 and an interface 106. In use of the apparatus 100, the apparatus 100 may receive data (wirelessly or using a wired connection) via the interface 106, in this example from an imaging apparatus 108. Moreover, the apparatus may output data (wirelessly or using a wired connection) via the interface 106 to an output device 112, which may for example comprise any or any combination of a display screen, an audio output, a printer or the like. The interface 106 may for example comprise interface circuitry (such as a Universal Serial Bus (USB) plugs and sockets) and/or transceiver circuitry.

In some examples, the apparatus 100 may comprise additional components, such as a user input device enabling a user to at least partially control the apparatus 100 (e.g. any or any combination of a keyboard, a keypad, a touchpad, a touchscreen display, a computer mouse or the like).

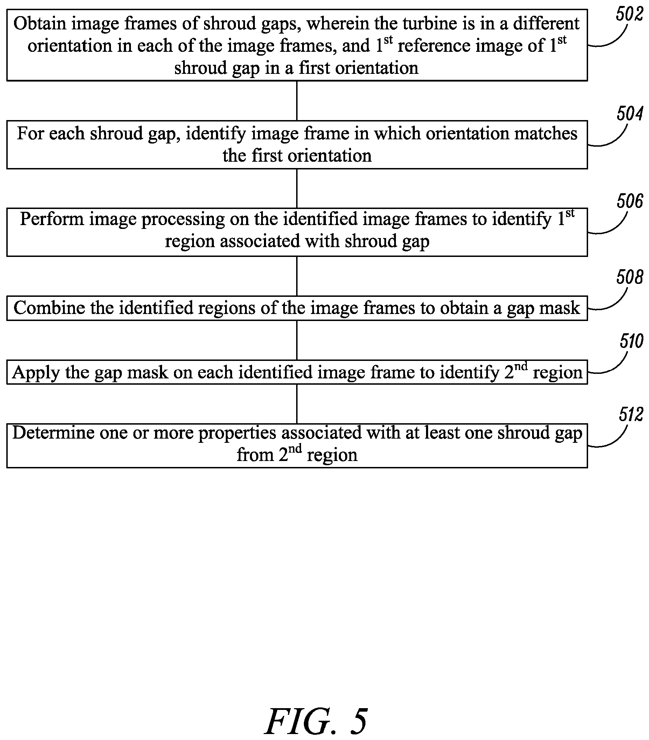

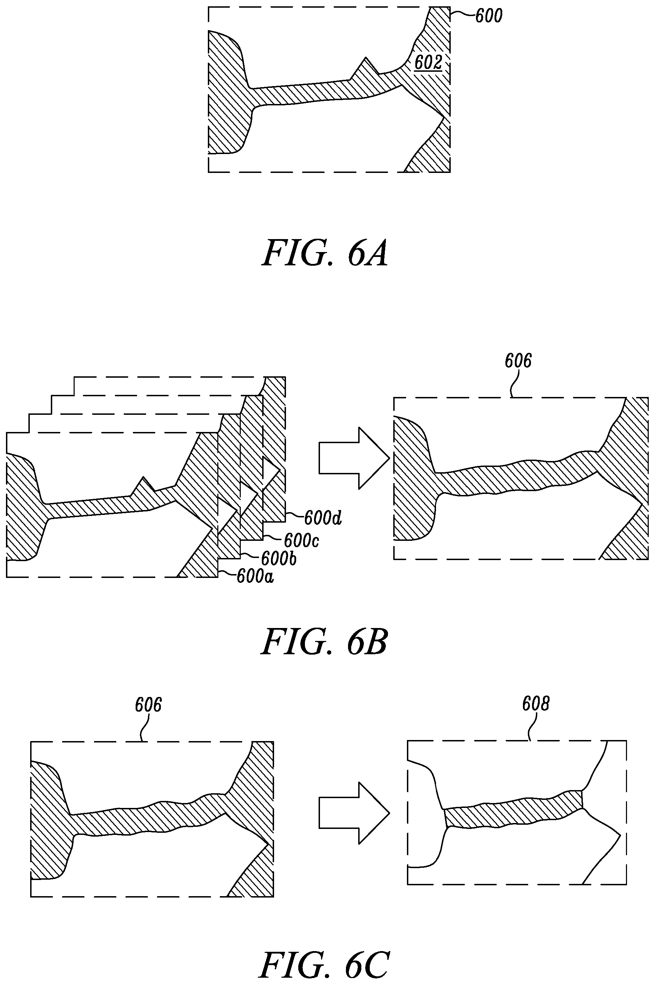

The apparatus 100 may comprise a standard computer, configured with software held or accessible to a memory thereof, or a special purpose computer configured with hardware or firmware to carry out the methods described herein. The processor circuitry 102 may comprise any suitable circuitry to carry out, at least in part, the methods described herein and as illustrated in Figs. 5 and 6A-D. For example, the processor circuitry 102 may comprise any or any combination of: at least one application specific integrated circuit (ASIC), at least one field programmable gate array (FPGA), single or multiprocessor architectures, sequential/parallel architectures; at least one programmable logic controller (PLC); at least one microprocessor; at least one microcontroller, a central processing unit (CPU), a graphics processing unit (GPU), or the like. The processor circuitry 102 may comprise one or more processors. In some examples, the processing circuitry 102 may be provided by server architecture and/or as a virtual machine.

The memory 104 is a machine-readable medium and is configured to store computer readable instructions 105 that, when read by the processor circuitry 102 causes the processor circuitry to carry out methods described herein, and as illustrated in blocks shown in Fig. 5, 6A-D, 7 and 8, at least in part. The computer readable instructions 105 may be software or firmware, or may be a combination of software and firmware. The memory 104 may be any suitable transitory and/or non-transitory computer readable storage medium, data storage device or devices. For example, the memory 104 may comprise a hard disk and/or solid-state memory (such as flash memory). The memory 104 may be permanent non-removable memory or may be removable memory. The memory may include any or any combination of local memory employed during actual execution of the computer readable instructions, bulk storage and cache memories which provide temporary storage of at least some computer readable instructions. The memory 104 may comprise any or any combination of a USB flash drive, an external hard disk drive, an external solid-state drive, a secure digital (SD) card, an optical disc (such as a compact disc (CD), a digital versatile disc (DVD) or a Blu-ray disc), or the like.

While the apparatus 100 is shown as a single device, components thereof may be distributed between a plurality of devices and locations. Moreover, it will be appreciated that, while the apparatus 100 is illustrated as a physical apparatus in Fig. 1, in examples, at least some functions of the apparatus 100 may be provided 'on the cloud' or the like.

The imaging apparatus 108 in this example is provided separately from the apparatus 100 although in other embodiments the imaging apparatus 108 may be part of the apparatus 100. The imaging apparatus 108 may comprise a borescope. Such apparatus may comprise a flexible tube (such as a snake arm), where an imaging sensor is mounted at one end of the flexible tube, and a display 112 is mounted at the opposite end of the flexible tube. In some examples, the imaging apparatus 108 may be embedded within a component (e.g. engine or turbine) which is to be imaged. In some examples, the imaging apparatus 108 may be provided on a moveable platform and the position and/or pose thereof may be controlled. In some examples, the processor circuitry 102 may control the operation of the imaging apparatus 108. In other examples, the imaging apparatus 108 may be controlled by a controller thereof, which may comprise processor circuitry.

In this example, the imaging apparatus 108 comprises a 2D imaging apparatus 110a and a 3D imaging apparatus 110b, although these may not both be provided in all examples, and/or may be provided as part of separate apparatus.

In examples set out herein, the imaging apparatus 108 may be controlled to provide 2D data of at least part of a turbine under inspection. The 2D imaging apparatus 110a may therefore comprise a camera (for example, a charge-coupled device (CCD) or a complementary metal-oxide-semiconductor (CMOS)) or the like.

Moreover, in some examples set out herein, the imaging apparatus 108 may be controlled to provide three-dimensional (3D) data of at least part of a turbine under inspection. The 3D imaging apparatus 110b may comprise a structured-light 3D scanner, stereo cameras or any other suitable apparatus. Consequently, in some examples, the imaging apparatus 108 may comprise a structured-light 3D scanner for generating 3D data, and a camera for generating 2D data.

The 2D data, and/or the 3D data may for example be passed to the apparatus 100 for processing, as further described below. The 2D data may for example comprise an image file (such as a .jpg, .bmp or .raw file for example) and the 3D data may specify point locations in the point cloud data (such as a .csv file for example).

**Fig. 2** is an example of an engine 200 comprising turbines which may be inspected using the apparatus 100. The engine 200 may be associated with an aircraft (e.g. mounted, or configured to be mounted thereon) and configured to generate propulsive thrust and/or electrical energy for the aircraft. In this example, the engine 200 is a gas turbine engine. However, in other examples, the engine 200 may be another type of engine, which may comprise shrouded blades.

In this example, the engine 200 has a principal rotational axis 202. The engine 200 comprises, in axial flow series, an air intake 204, a propulsive fan 206, an intermediate pressure compressor 208, a high-pressure compressor 210, combustion equipment 212, a high-pressure turbine 214, an intermediate pressure turbine 216, a low-pressure turbine 218 and an exhaust nozzle 220. A nacelle 222 generally surrounds the engine 200 and defines both the intake 204 and the exhaust nozzle 220. An internal support structure 224 surrounds the fan 206, compressors 208, 210, combustion equipment 212, and turbines 214, 216, 218.

Briefly, the engine 200 operates as follows: Air entering the intake 204 is accelerated by the fan 206 to produce two air flows: a first air flow which passes into the intermediate pressure compressor 208 and a second air flow which passes through a bypass duct 226 to provide propulsive thrust. The intermediate pressure compressor 208 compresses the air flow directed into it before delivering that air to the high-pressure compressor 210 where further compression takes place.

The compressed air exhausted from the high-pressure compressor 210 is directed into the combustion equipment 212 where it is mixed with fuel and the mixture combusted. The resultant hot combustion products then expand through, and thereby drive the high, intermediate and low-pressure turbines 214, 216, 218 before being exhausted through the nozzle 220 to provide additional propulsive thrust. The high 214, intermediate 216 and low 218 pressure turbines drive respectively the high-pressure compressor 210, intermediate pressure compressor 208 and fan 206, each by suitable interconnecting shaft.

Each of the fan 206 and the turbines 214, 216, 218 comprise a plurality of rotating blades, which are nominally the same. While inspections may be carried out in relation to any part of the engine 200, examples herein are generally described in relation to inspections of the turbines 214, 216, 218.

It will be appreciated that the engine 200 illustrated in Fig. 2 is by way of example only, and various alternatives are within the scope of the present disclosure. However, in examples herein, the turbine undergoing inspection herein comprises turbine blades having shrouds. Moreover, in some examples, the turbine undergoing inspection herein comprises a turbine with a repeating structure, i.e. a plurality of turbine blades which are similar, or nominally the same, as one another. Turbine blades within a turbine, such as the turbines 214, 216, 218 may be nominally the same as one another, at least in part. This is the case even though, as a result of manufacture, use or damage, there may be some differences between the actual blades. Some embodiments set out herein may utilise the fact that the parts are similar to one another, or to a nominal model, to analyse or measure features thereof in an efficient manner.

While a particular example of an engine with shrouded blades has been described herein, it will be appreciated that other examples of turbines, fans and the like may comprise shrouded blades and the apparatus 100 may be used to inspect any machinery (e.g. turbomachinery) that comprises shrouded blades.

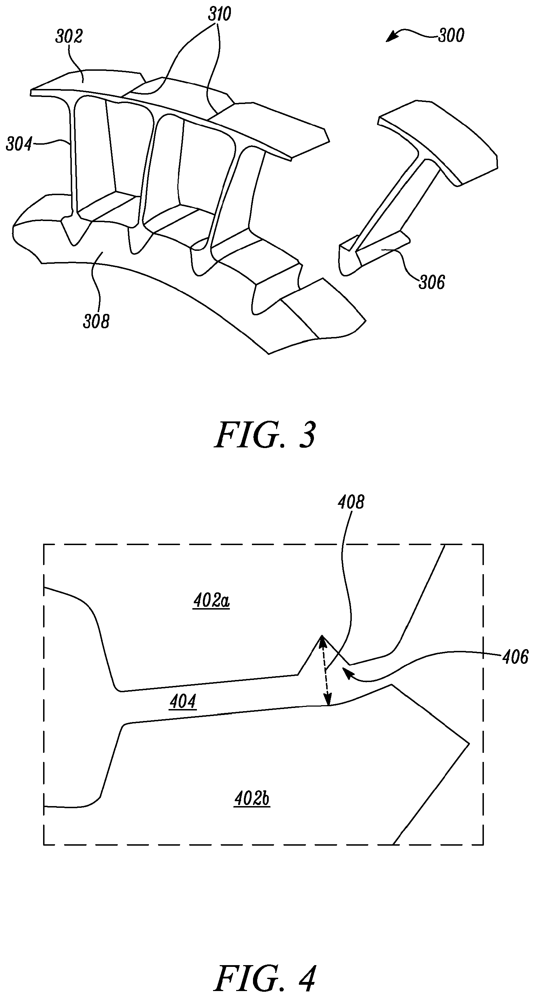

**Fig. 3** is a schematic illustration of part of a turbine 300 according to some embodiments. The turbine 300 is an example of a turbine that may be inspected according to some of the methods set out herein.

The part of the turbine 300 that is shown in Fig. 3 is partially assembled and comprises four turbine blades. Each turbine blade comprises a shroud 302, an aerofoil 304, a root 306 and is mounted to, or mountable on, a platform 308. The root 306 of the aerofoil 304 secures the aerofoil 304 to the platform 304. Between any two adjacent shrouds 302 is a shroud gap 310.

When placed in situ within an engine, the turbine 300 is surrounded by the internal support structure 224, which is lined with a liner.

**Fig. 4** is a schematic illustration of two adjacent shrouds 402a, 402b of a turbine which form a shroud gap 404. The illustration is an example of an image frame which may be captured by an image processing device and may be used to perform the methods set out herein in some embodiments. During use, defects may develop in the shrouds 402a, 402b which alter the shroud gap 404. For example, Fig. 4 depicts a hole 406 that passes through one of the shrouds 402a completely. Such a hole 406 in a shroud 402a is referred to herein as shroud holing. It can be seen in Fig. 4 that the shroud holing results in an increase in width of the shroud gap 404 at the position of the shroud holing, providing a maximum shroud gap dimension indicated at 408.

As noted above, the turbine may be inspected in situ and therefore images of shroud gaps may be captured against a backdrop which includes the liner of the internal support structure.

Measurements of shroud holing and other shroud defects can provide an indication of the wear experienced by a turbine and can therefore be used to determine whether the turbine requires servicing, maintenance and/or replacement. For example, a criterion may be placed on the total cumulative shroud holing area for a turbine. In some examples, if the total cumulative shroud holing area exceeds a threshold value, e.g., x mm$^2$, then it may be determined that the turbine should be removed for servicing. Alternatively, a criterion may be placed on a maximum size of a single hole.

Alternatively, or in addition, a criterion may be placed on the widest shroud gap of a turbine, e.g. a shroud gap dimension associated with a hole, marked as 408 in the example of Fig. 4. While this coincides with the position of the hole 406 in the illustrated example, this may not be the case in all examples, and even without holing, some shroud gaps may be wider than others. For example, if the widest shroud gap of a turbine exceeds a threshold value, e.g., y mm, then it may be determined that the turbine should be removed for servicing.

In some embodiments, the criteria for servicing, maintenance and/or replacement of the turbine may be any or any combination of multiple properties of the turbine, e.g., one or more of: total shroud holing area, maximum shroud gap, number of shroud holes, number of flight cycles, number of flight hours, etc. For example, the threshold for total shroud holing area and/or maximum shroud gap may vary depending on the number of flight cycles and/or the number of flight hours in which the turbine has been used. For example, a higher threshold total shroud holing area may be set if the number of flight cycles is low and/or the number of flight hours is low.

**Fig. 5** is a flow diagram illustrating a computer-implemented method for determining one or more properties associated with at least one shroud gap of a turbine according to some embodiments. The turbine may be the turbine 300 illustrated in Fig. 3, and/or any one of turbine 214, 216 and 218 illustrated in Fig. 2. The shroud gap may, for example, be any of the shroud gaps 310 illustrated in Fig. 3 or the shroud gap 404 illustrated in Fig. 4.

The one or more properties associated with at least one shroud gap of the turbine may comprise one or more properties that can be used to determine whether the turbine requires servicing. For example, the one or more properties may comprise a measurement of a shroud gap, e.g., a measurement of the maximum shroud gap of the shroud gaps captured by the plurality of image frames. The maximum shroud gap may be defined as a longest orthogonal distance between nearest edges of any two adjacent shrouds of the turbine, or any two adjacent shrouds of the shrouds that were captured by the plurality of image frames. In other examples the one or more properties associated with at least one shroud gap of the turbine may comprise a cumulative shroud holing area for the turbine blade, where the area of any identified hole that passes through the shroud completely contributes to the cumulative shroud holing area. The cumulative shroud holing area may alternatively be for part of the turbine blade, e.g., a part of the turbine blade captured by the plurality of image frames.

The shroud gaps captured by the plurality of image frames may be all the shroud gaps of the turbine. Alternatively, the shroud gaps captured by the plurality of image frames may be a subset of all the shroud gaps of the turbine.

As used herein, a portion of an image may correspond to one or more pixels of the image.

The method comprises, at block 502, obtaining: (i) a plurality of image frames of shroud gaps of the turbine, and (ii) a first reference image of a first shroud gap in a first orientation. In each of the plurality of image frames, the turbine is in a different orientation. In some embodiments, the plurality of image frames may be a video file of the shroud gaps while the turbine is in motion. The turbine may for example be driven by hand or using a driving tool while video is recorded. Video recording the turbine in motion accounts for the backlash effect in which the shroud gap(s) is/are different when the turbine is in motion compared to when the turbine is stationary. It also makes it easier to consistently obtain an image frame for each of the shroud gaps in which the shroud gap is in an intended orientation.

At block 504, the method of Fig. 5 further comprises, for each of a plurality of shroud gaps, identifying an image frame in which an orientation of the shroud gap matches the first orientation.

Identifying the image frames may be based on the first reference image, and may for example comprise using algorithms and/or image processing techniques. For example, this may comprise determining difference values between the reference image and the image frames of the video. In one example, difference data may be determined on a pixel-wise basis. It may be appreciated that image frames are likely to be similar to the reference image when a shroud gap is in a relatively similar position to the shroud gap as captured in the reference image. In other examples, the images may be identified by a tag, which may be added by a user. In other examples, features of the image, such as edges or corners, may be identified, and images in which the features have an intended position or orientation may be identified as having the first orientation. In still other examples, the orientation may be identified using machine learning image processing techniques. Other techniques may be used in other examples.

To discuss a method using difference data in greater detail, considering the video as a whole, there are likely to be peaks and troughs in difference data indicative of a degree of different between successive frames, the troughs representing a good alignment between a subject shroud gap and the reference shroud gap as captured in the respective images and the peaks representing significant misalignment therebetween. If the turbine is being driven at a consistent speed, these may be expected to be regular and smoothly varying. In some examples, image frames which do not conform to smoothly varying trends in difference data may therefore be removed from the image frames under consideration. These image frames may comprise those in which there was a fluctuation in lighting conditions or an error in data capture, or the like.

For example, images which are associated with a difference value which is above or below the median difference value may be removed from the image frames under consideration. In some examples, a median value of the peaks (i.e. maxima in difference values) and a median value of the troughs (i.e. minima in the difference values) of the video frames when considered as a sequence may be determined. This can be used to set rising and falling thresholds for image frame selection wherein:

$$\text{rising difference threshold} = \text{maxima\_fit} - \varepsilon \times \text{abs}(\text{median} - \text{maxima\_fit}),$$

$$\text{falling difference threshold} = \text{minima\_fit} + \varepsilon \times \text{abs}(\text{median} - \text{minima\_fit})$$

where $\varepsilon$ is a factor which determines how close to the maximum/minimum the rising/falling thresholds are set

In examples, once any identified image frames have been removed using a thresholding technique, image frame(s) having a minimum difference value may be selected. In other examples, image frame(s) taken from the identified 'troughs' (i.e. minima) in the data may be selected.

To consider an example using edge detection in greater detail, a similarity check may be performed between a reference image and an image frame. For example, prominent edges that mark the outline of the blade and liner may be extracted in both images. Image border pixels may be filtered to mitigate the effects of edge boundaries. In some examples, a minimum area suppression is applied to the resulting image to filter out short edges. A distance transform operator may be applied to the edges of the reference image, and using the distance transform as a lookup table, the distance of each edge pixel of the image frame under consideration may be determined. An average distance may be computed and normalised using a lower and upper threshold (e.g. between 0% and 100%, where 0% indicates the worst possible match between the current orientation and the reference, or first, orientation, and 100% means best match).

The first orientation may correspond to an orientation in which a good quality image may be acquired, which may be associated with any or any combination of a relative position between the camera and the turbine, light conditions, or any other factor which may allow a shroud gap to be imaged. For example, the first orientation of the first shroud gap may correspond to a camera that is capturing the image frames imaging into the first shroud gap. In other words, the camera may be positioned relatively close to the axis of rotation and face generally towards the nacelle so that the shrouds on the tips of the blade pass through its field of view. An advantage of imaging into the shroud gap in this way in some turbines is that the shroud gap can be more easily detected and distinguished from the shroud because an engine liner which forms the background to the shrouds may lie in the shadow of the shrouds. The first orientation may also or instead correspond to the first shroud gap being horizontal relative to the camera capturing the image frames. It has been noted that a contrast between the background of the image and the shroud may be better when the gap is horizontal in some examples because the background may be illuminated more evenly on both sides of the gap. Thus, obtaining image frames in which the shroud gap is horizontal may allow the gap, as well as properties associated with the shroud gap such as shroud holing, to be identified more easily when compared to other orientations.

Still other examples may, in addition or instead of image processing techniques, use control or feedback of the apparatus to acquire an image of a turbine blade in an intended pose. For example, a positioning apparatus may be used to pause the turbine when a blade is in a specified location (e.g. an accurate turning tool that stops when each blade is in the same location) such that an image can be captured. In still further examples, a position measuring apparatus may be provided, for example a position encoder such as a rotary encoder. This may provide position information from which the location of a blade and/or imaging apparatus at a particular time may be determined. In some examples such information may be associated with an image, for example, as meta data or a data tag.

At block 506, the method of Fig. 5 further comprises performing image processing on the identified image frames to identify a first region of that image frame associated with a shroud gap. The first region may correspond to portions (e.g. pixels) of the identified image frame that comprise one or both of a background (e.g. an engine liner) and the shroud gap.

As will be discussed in greater detail below, block 506 may comprise classifying portions of the identified image frame that comprise one or both of a background and the shroud gap as the first region of that image frame. Alternatively, the first region of the image frame may be described as portions of the image frame which do not contain an image of part of a shroud (or associated parts of turbine blade). Portions comprising one or both of the background and the shroud gap are easier to distinguish from the shroud (and thus classify) than portions comprising only the shroud gap.

In some examples, a first machine learning model is used to identify the first region. For example, the first machine learning model may be a convolutional neural network. The first machine learning model may be trained using a plurality of images in which the image portions have been manually labelled. For example, the labels may specify image portions as comprising one of (i) background (e.g. any part of the image which does not comprise part of the shroud; (ii) shroud gap (e.g. specifically the portion of the background which is between the shroud edges); and/or (iii) background which is not shroud gap. In some examples, any 'background' part of the image which is not part of the shroud may be an image of an engine liner, as this may lie behind the shrouds in some images. However, in other examples, the background may include other engine features, or the images may be acquired of the components outside an engine. In other examples, other image processing techniques such as edge detection or object recognition may be used to classify portions of the image.

At block 508, the method of Fig. 5 further comprises combining the identified regions of the image frames to obtain a gap mask. Combining the identified regions of the image frames may comprise determining an average gap mask.

According to some embodiments in which the first region comprises a background and shroud gap, combining the identified regions of the image frames to obtain the gap mask may comprise averaging over the first regions of the identified image frames to obtain an average image frame comprising an identified region indicative of an average of the backgrounds (including shroud gaps) for the images.

Combining the identified regions may further comprise using a second machine learning model to classify portions of the average image frame that comprise shroud gap. Thus, the second machine learning model can distinguish shroud gap from the rest of the background in the image allowing the shroud gap to be singled out. However, in other examples, other image processing techniques may be used to identify the shroud gap within the average image, or within each image prior to averaging. However, applying the image processing to the average image appears to be robust in practice and reduces the processing required.

Combining the identified regions may further comprise identifying the gap mask as corresponding to the portions of the average image frame that comprise shroud gap plus a surrounding margin. Such a surrounding margin may assist in ensuring that any relevant properties associated with the shroud gaps are captured by the gap mask. For example, it may be the case that some shroud gaps are small, and an average shroud gap may therefore be smaller than some or all shroud gaps. Therefore adding a margin may assist in capturing the shroud gaps fully, including at least undamaged portions of shroud gap edges. In some examples, the margin may be selected so as to be inclusive of the shroud gaps while generally not including additional features such as holing. For example, the margin may be a few, or a few tens, of pixels. A margin, if added, may be added to each image or to the average image. In some examples, the margin may be selected so as to capture a maximum anticipated hole size, such that any anticipated holing is likely to be within the area identified by the gap mask.

A second machine learning model to identify the shroud gap may be a convolutional neural network. The second machine learning model may be trained using labelled images distinguishing the shroud gaps from other background region, and may be applied the outputs of the first machine learning model.

In other examples, image processing and/or geometrical techniques may be used to identify the shroud gaps. For example, the corners of adjacent shrouds (or adjacent 'average' shrouds in the average image) may be identified by a user or by image processing techniques and joined to provide the edges of the shroud.

Identifying background areas in a plurality of images and subsequently identifying a shroud gap within a composite or average image has been found to be a robust technique for identifying a region of interest in an image, wherein the region of interest may contain features (e.g. shroud edges) of interest for acquiring measurements which may in turn be indicative of a condition of the component. The two stage process may for example remove ambiguity and thus allow the detection methods (e.g. a first and second machine learning model as described above) to more accurately isolate regions of interest.

At block 510, the method of Fig. 5 further comprises applying the gap mask on each identified image frame to identify a second region. In some embodiments, applying the gap mask to each of the identified image frames comprises carrying out a logical AND operation between the first region of the image frame and the gap mask.

The second region of each identified image frame may therefore comprise the shroud gap (plus in some cases potentially a surrounding margin). The second region may also be referred to as the region of interest. This may identify a region of the image frame to which further analysis, such as edge detection and/or feature detection, may be applied.

At block 512, the method of Fig. 5 further comprises performing image processing on the second region to determine the one or more properties associated with the at least one shroud gap. For example, performing image processing may comprise performing a parabolic fit on an edge within or in the vicinity of the second region to model perfect or expected edges. For example, discontinuities in an edge may be smoothed by fitting a parabolic contour to the identified edge. This may then be used to identify properties such as imperfections in the detected edge and therefore detect shroud holing. The method of Fig. 5 may further comprise determining an area of shroud holing for each identified image frame. Such methods may further comprise summing the determined area of shroud holing for each identified image frame to obtain the cumulative shroud holing area for the turbine or a part of the turbine captured by the plurality of image frames.

In some embodiments, performing image processing on the second region at block 512 comprises identifying a maximum shroud gap for the identified image frame by applying an edge detection algorithm such as a max-min filter to determine an edge within or in the vicinity of the second region, and thereby determine a width between the edges. The method may further comprise comparing the maximum shroud gap for each identified image frame to obtain the maximum shroud gap of the turbine.

In some embodiments, performing image processing on the second region at block 512 may comprise receiving data comprising 3D data representing a geometry of at least part of the turbine (which may comprise 3D data representing the blade and shroud under inspection), and determining a 2D to 3D mapping between a reference image and the 3D data, where the locations (e.g. pixels) in the reference image are mapped to locations (e.g. points or voxels) in 3D space. Performing image processing on the second region at step 512 may further comprise determining a 2D to 2D mapping between the image frame and a reference image, and determining a measurement of a property of the shroud gap using the 2D to 2D and the 2D to 3D mapping.

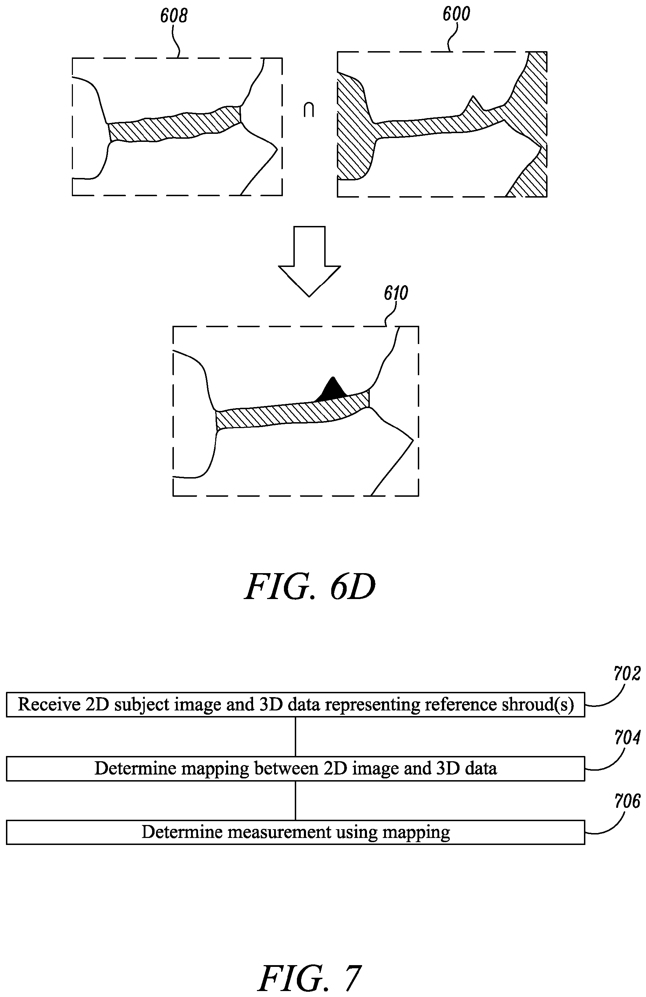

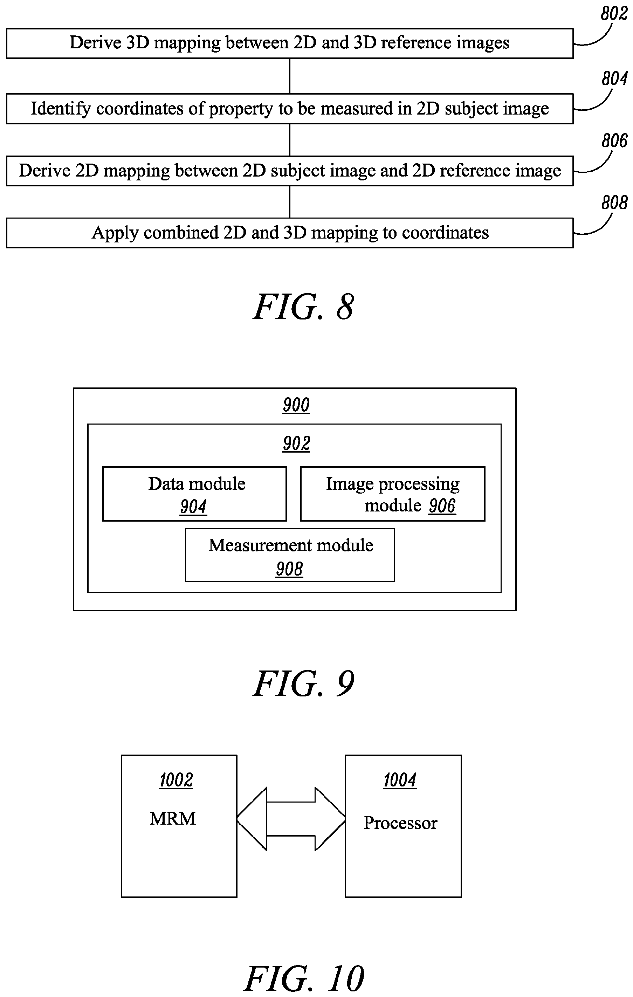

In some examples, performing the image processing may utilise techniques described in EP3836076, for example in relation to Figures 8 and 12 thereof. In those examples, 3D data is acquired for the blades. In the example of Figure 8 of EP3836076, parameters of a feature are measured by determining coordinates of a feature in 3D data. In the example of Figure 12 of EP3836076, 2D and 3D data of each of one or more blades received and a feature of interest is determined in the 2D data, which is used to determine coordinates of the feature in the corresponding 3D data by applying a transformation algorithm thereto. One or more parameters of the identified feature may be measured using the coordinates of the identified feature in the three-dimensional data. In other examples this may utilise a method as further set out in relation to Fig. 7 and/or 8.

The method of Fig. 5 may further comprise, responsive to determining that at least one of the one or more properties associated with the at least one shroud gap of the turbine fails to satisfy a corresponding criterion, determining that the turbine requires servicing/maintenance/repair/replacement or the like, and issuing to a user an indication of the determination.

Figs. 6A-D illustrate an example of a method of carrying out block 506 in greater detail.

The method starts with an image frame for example comprising an image as shown in Fig. 4, which in this example is supplied to a convolutional neural network (CNN). In some examples, the image frame may have a standard size, which may be the same size as images used to train the CNN.

In a particular example, this image frame is processed using a trained neural network. In a particular example, the network architecture may be the same as, or similar to, that described by Benjamin Staar, Michael Lütjen, and Michael Freitag in "Anomaly detection with convolutional neural networks for industrial surface inspection", Procedia CIRP 79 (2019), pp. 484-489.

In an example, a network may include of the following layers:

- $11\times11$ convolutional layer with 12 output channels and Exponential Linear Unit (ELU) activation
- 5 residual blocks with 50 output channels (in a departure from the network described by Staar et al, which has 3 residual blocks)
- $1\times1$ convolutional layer with 25 output channels and ELU activation
- $1\times1$ convolutional layer (network in network) with 1 output channel and sigmoid activation (this is a further departure from the network described by Staar et al, which has just one convolutional layer)

In a further departure from the network described by Staar et al, the example network may omit a max-pooling layer.

Such a network may be trained using labelled images, which may be labelled frames extracted from a video of a turbine. For example, these may be manually labelled using a tool such as Computer Vision Annotation Tool. The labels may be exported as an Extensible markup language (XML) file or the like, and used to generate output masks for training.

For training, the images and output masks may be cropped to a margin around the shroud gap (e.g. a n pixel margin). Binary cross-entropy may provide a suitable loss function.

In some examples, the blade gap pixels in such images may be weighted higher to prevent the network converging on a trivial solution. However, in other examples, there may be no such weighting of the pixels. In other examples, the network may be trained to limit the labelling to be between the end points of the shroud. This may allow the network to distinguish the average gap from any surrounding image pixels of the line.

In some examples, a first proportion (e.g. 60%) of imaged shroud gaps may be used for training and a second proportion (e.g. 20%) for validation and a third proportion (e.g. 20%) for testing. In some examples, a few hundred images (e.g. at least 100, at least 200, at least 300 or at least 400 images may be acquired and used in training, validation and testing. In a particular example, 428 images were acquired and used in training, validation and testing, although this number may be higher or lower in other examples.

The network may be trained for a number of epochs. In example embodiments, 1500 epochs were used. In some examples, different networks with a different number of channels may be trained, and a number of network channels may be chosen so that the validation loss is minimised. The number of channels could be increased if more training data becomes available.

The output of applying such a trained system is shown in Fig. 6A, in which an image frame 600 has been segmented into a first region 602 comprising 'shroud gap + other background' (or 'non-shroud image portions'), with the remaining portion of the image showing the two shrouds which are separated by the gap.

As is illustrated in Fig. 6B, a stack of such partitioned image frames 600a-d, each relating to a different shroud gap may be combined to create an 'average' image. For example, pixels which are identified as being part of the first region may be given a value of 0, whereas pixels which are outside the first region may be given a value of 1.

The average pixel value in this example is determined on a pixel wise basis, so that pixels having corresponding positions in each image are averaged. This will result in a 'grayscale' type image, with pixel values varying between 0 and 1. In other examples, the values associated with pixels may be different.

A threshold is applied to the average image to create a binary mask that may be "True" at pixels value below the threshold. Pixels at the boundaries of the resulting binary mask may be set to "False". An example binary mask is shown as image 606 in Fig. 6B.

In order to extract the gap from this binary mask, further processing is applied. In some examples, the two largest components are selected from the binary mask, and are assumed to be blades (or the shroud portions thereof). Further image processing may be applied to enlarge those two components, and the intersection of the two largest components (i.e the shrouds) is selected as comprising pixels indicative of the shroud gap. Small pixel areas are filtered out and only the largest overlap region is selected. This can provide a binary 'gap mask', as shown in image frame 608 of Fig.6C. In some examples, a margin may be added to the gap mask as described above.

In other examples, the edges of the shroud may be identified within the image using edge detect and/or feature recognition techniques and used to define the space between the substantially parallel shroud edges as the shroud gap. For example, notional vectors may be determined between identified corners of two shrouds which are closest to one another to define two edges of the shroud gap, with the other edges of the shroud gap given by the substantially parallel shroud edges.

In other examples, however, a machine learning method may be utilized to directly determine the average shroud gap as described above. And/or gap mask without first identifying a 'shroud-gap + background' region. For example, such a network may be trained using images with the shroud gap region thereof labelled.

In still other examples, as outlined above, a second convolutional neural network, trained using labelled images of shroud gaps, or labelled images of 'average' shroud gaps, may take the average "gap + other background" (for example, as shown in as image 606 in Fig. 6B) image as input and output a mask indicative of the gap, as shown in Fig. 6C. In some examples, such a network comprises convolutional layers only.

An example network may comprise of the following layers:

- Greyscale image input layer (1 channel)
- 3 12 x 12 convolutional layers with 20 output channels with ELU activation
- 1 x 1 convolutional layer (network in network) with 10 output channels and ELU activation
- 1 x 1 convolutional layer (network in network) with 1 output channel and sigmoid function

The training and validation data comprises thresholded outputs of the first neural network as input and logical OR of gaps (without holing) as desired output. A first proportion (e.g. 60%) of average "shroud gap + other background" images may be used for training and a second proportion (e.g. 20%) for validation and, in some examples, a third proportion (e.g. 20%) for testing. The resulting mask is used to select the region of interest (ROI) for detecting the shroud gap in individual predictions of each input image.

The gap mask is used to select the region of interest (ROI) for detecting the shroud gap in each input image.

As is shown in Figure 6D, a logical AND, or an intersection, between each selected frame 600 and the gap mask 608 may be carried out. This identifies the region of the gap and correspondingly deselects the background portions of the image which are not between the two shrouds. Image processing may comprise performing a parabolic fit on the second region to model 'perfect' or expected edges based on edges detected therein. Moreover, edge detection may be implied to identify actual edges within the image. The identified edge and the modelled edge can be compared to identify imperfections associated with the detected edge and therefore shroud holing. In some examples, the detected edge may extend outside the second region (i.e. beyond the region corresponding to and identified by the gap mask), for example if it comprising holing. The gap may be assessed to determine the measurements thereof, for example the maximum gap. Moreover, the area associated with the hole may be further assessed to determine a measurement thereof.

Fig. 7 is an example of a method for performing measurements, for example to evaluate a size of a hole which may take into account the geometry of the shroud. The method may be implemented, at least in part, by processor circuitry such as the processor circuitry 102 described above.

The method comprises, in block 702, receiving data comprising 3D data and 2D data, the 2D data comprising a subject image of a subject shroud or shroud gap, and is the image under review to determine at least one property of the shroud gap, and the 3D data comprising data representing a geometry of a reference shroud/shroud gap (the 'reference element' herein after) of the component.

The 2D data may for example be acquired by imaging apparatus, such as the imaging apparatus 108 described above. As set out above, the 2D data may comprise image frames taken from a video of the turbine as it is driven, in which case the imaging apparatus 108 may be a video recording apparatus. For example, a turbine 214, 216, 218 may be rotated about the principal rotational axis 202 such that the shroud gaps therein move through a field of view of an imaging apparatus 208 to acquire a sequence of image frames of one or more elements thereof. In some examples, the subject image may be automatically selected from such a sequence, based on an alignment as described above.

A video (or multiple images) may be captured while the component is rotated continuously. Manual and/or automated turning of a rotary component can be inconsistent due to factors such as backlash, gearbox bearings, a clutch mechanism and/or light motion effects due to the inspection environment, in particular if the rotating component is brought to rest in order for imaging of an element to take place before being moved on to image a next element. However, in examples herein, regions of interests for all the elements to be assessed can be extracted from the video frames/image set, reducing the impact of such effects.

In some examples, the position of the component may be monitored using position measuring apparatus. For example, the rotation may be monitored using a rotary encoder which records an angle of rotation. In some examples, this information may be used to extract position information of an element such as a blade, shroud or shroud gap.

Moreover, while the description above relates to a rotating component, similar principles may be applied to an image capture device which is moved about a component. For example, this may be continuously driven while capturing video and/or multiple images of a component under inspection from different angles.

The 2D data may be provided as an image file, e.g. a .jpeg file, a .bmp file or the like. In some examples, the 2D data may be provided from a memory, or over a network or the like, having been captured separately from performance of the method of Fig. 7.

In some examples, the 3D data comprises data representing another particular shroud or shrouds of the turbine. In other words, the subject image may be an image including a first shroud and the 3D data may represent or include at least a second, different shroud of the component, which may be referred to as a reference element. For example, the 3D data may be acquired by scanning or 3D imaging at least part of the turbine. An inspection device, which may comprise the imaging apparatus 108 described above, may be used to obtain a 3D scan or image of the reference element. For example, imaging apparatus 108 may be inserted into a turbine 214, 216, 218 of an engine 200 and the processor circuitry 102 may receive three-dimensional data of at least one of the turbine blades of the turbine 214, 216, 218, including data representing the shrouds thereof. In some examples, the imaging device 108 comprises a structured-light sensor, which may acquire three-dimensional coordinates of pixels using projected light using triangulation and calibration parameters. In some examples, 3D data may be acquired using stereo cameras and 2D data may be converted into 3D data, for example by processor circuitry of the imaging device 108, or by the processor circuitry 102. In such examples, corresponding pixel points may be identified in the stereo images and used to compute 3D coordinates. In some such examples, an image used in stereo imaging could also be used as a 2D image, for example a 2D image of the reference element.

In some examples the reference element (i.e. shroud or shrouds) is selected based on at least one property thereof for example comprising a component which appears to be in good physical condition, or having little by way of defects such as deformations, holes, nicks, or corrosion. This may be assessed in isolation or in comparison to other blades/shrouds. As properties such as defects on other shrouds may be effectively mapped onto the geometry of the 3D data, providing a blade/shroud which provides a relatively complete surface shape assists in providing accurate measurements of properties on other blades. If, for example, a reference shroud has a significant part thereof missing due to damage, then part of an undamaged subject shroud may be mapped incorrectly. Moreover, where part of a reference element is missing, there may be inherently fewer features available to match with another image.

Alternatively or additionally, it may comprise selecting an image which shows an element in an 'average' or 'representative' condition, which may be more representative of the set of elements as a whole. For example, if the images show a set of elements comprising blades and/or shrouds with different levels of damage such as missing sections or surface texture, an image may be selected which has an intermediate level of damage. Images of blades/shrouds with less damage and those with more damage may map approximately equally well to an image of such a blade/shroud. Viewed another way, selecting a 'best' or 'nominally ideal' element as the reference element may bias the registration features which can be used for mapping. In some such cases, a 'representative' reference element may reduce such bias.

In other examples, a plurality of reference images may be identified which show elements having a range of conditions, which may better represent the set of elements as a whole. In some such examples, there may be a further selection from the set of reference images, for example of the reference image which best represents the particular element under inspection, in order to determine the mapping(s) for that element. Alternatively, a plurality of mappings to the set of reference images may be determined.

Such elements may be selected by an operator, or programmatically by determining a metric corresponding to one or more features (e.g. surface texture, edge shape, presence of holes, etc) and selecting one or more elements as a reference element based on the metric.

In other examples, the 3D data may comprise data derived from a model of the turbine, turbine blade or shroud. For example, the 3D data may be derived from a CAD model or the like, and be indicative of the intended, ideal, nominal or archetypal geometry of a turbine blade, or a shroud thereof. For example, the 3D data may comprise a model (for example a mesh model, a vector model, a polygon model or a point cloud) of an element such as a turbine blade which may be used in design and/or manufacture of such an element. It will be appreciated that, in practice, a manufactured element will differ from the geometry due to manufacturing tolerances and/or any wear caused to the component. Using 3D data indicative of a nominal component avoids unanticipated nicks, holes or deformations on the reference blade influencing a mapping of a property on a subject blade.

The processor circuitry 102 and/or the memory 104 may store the 3D data for example as a .csv file or the like.

In block 704, a mapping is determined between the subject image and the 3D data, wherein locations in the first image are mapped to locations in 3D space. For example, this may comprise matching features of the subject image and the 3D data. In some examples, this may comprise matching geometrical features, such as a corner, angle, a dimension, or the like. In some examples, the matching may utilize machine learning models. In some examples, as is set out in greater detail below, the mapping may comprise a two stage mapping, wherein a 2D to 2D mapping is determined, mapping between the subject image and a reference image (which may be an image of the reference element, or may be an image of another element of the component), and a 2D to 3D mapping is determined, wherein the 2D to 3D mapping maps between the reference image and the 3D data, wherein locations in the reference image are mapped to locations in 3D space. For example, pixels in a 2D image may be mapped to voxels or points in the 3D image.

In other examples, the mapping may be a single stage mapping between the subject image and the 3D data. For example, a registration (e.g. alignment) may be determined between the image of the element in the subject image and the 3D geometry of the reference element.

Block 706 comprises determining a measurement of a property of the subject shroud or shrouds using the mapping. In one example, a feature on the subject image to be measured may be indicated, manually or automatically, on the subject image. For example, this may be the size of a hole, or a maximum gap. This may provide coordinates of locations (e.g. pixel locations) indicative of the property to be measured. These locations may then be mapped into 3D coordinates via the mapping determined in block 704.

In some examples, the output of the CNN model described above may provide coordinates of the hole or an indication of the edges of the gap, allowing a dimension such as a maximum gap width to be extracted. However, the property or feature may be identified automatically in some other way for example using correlation, matching, texture analysis, labelling by a user or the like. In some examples, block 706 may comprise determining coordinates of the identified property, e.g. the coordinates of each pixel of the feature or property of interest in the image or image file.

This method therefore allows the geometry of the shroud to be taken into account in the measurement, despite the property having been identified on a 2D image. Viewed another way, the method described in Fig. 7 avoids the need to obtain 3D measurements of each of the shroud/shroud gaps of interest, as multiple subject images can be mapped to the same 3D data representation of a shroud, or a shroud gap. As obtaining such 3D measurements can be time consuming and also utilize significant energy resources, the method of Fig. 7 can result in faster assessment of properties of elements without unduly sacrificing accuracy, and/or may result in a reduction of the processing resources utilised.

As noted above, in some examples, a two stage mapping may be used. An example of a two stage mapping is now discussed with reference to the flowchart of Fig. 8.

Block 802 comprises determining a 2D to 3D mapping between a 2D reference image and the 3D reference image, wherein these are two images of the same underlying shroud or shrouds (the 'reference element' herein). In some examples, this may comprise matching pixels of the 2D reference image with corresponding points of the 3D reference image, which comprises depth information. For example, a registration operation of the 2D and 3D reference images may be carried out such that there is a minimum error in their alignment. In other examples, recognisable features between the 2D and 3D reference images may be detected and aligned with one another. It will be appreciated that, in some examples, there may be scale and/or field of view differences between the 2D and 3D reference images. In other examples, there may be some misalignment between the orientations of the reference element in each of the reference images. However, in other examples, the images may be identical in scale and field of view and in such cases pixel locations may be mapped to points in the 3D image based on their XY position, for example. Where there are differences in scale and/or field of view, registration may be used, with, for example, a minimisation of difference of location of edges or other features which may be identified manually or automatically using image processing techniques such as edge or feature detection.

Each pixel in the 2D reference image may be associated with a corresponding point (e.g. voxel) in the 3D reference image, which in turn is associated with depth information.

Block 804 comprises identifying coordinates of a property to be measured in a subject image. For example, this may comprise a user marked or automatically identified feature such as a hole or nick in an edge, a distance between shrouds or the like. Pixels indicating the extent of such a property may be automatically (e.g. using image processing techniques) or manually identified in the subject image.

Block 806 comprises determining a mapping between the subject image and the 2D reference image. In some examples, in order to determine such a mapping, image registration techniques may be used. For example, this may comprise intensity-based image registration or feature-based image registration.

In intensity-based image registration techniques, a pair of images may be iteratively compared to determine how similar they are while a transformation matrix is applied to one of the images between comparisons. In some examples, interpolation is used to estimate the values of pixels which are present in the transformed image but not in the original image. Each comparison provides a metric and the process may continue until the metric or another parameter, such as the number of iterations, meets at least one predetermined criterion. The criterion for the metric may for example comprise the convergence to a minimum value or a minimum rate of change. The transformation which results in the most similar image may be used as a mapping between the subject image and the 2D reference image.

The initial image transformation for an intensity-based image registration may for example involve the use of landmarks and/or a geometric alignment of features such as image centres, or centre-of-mass (or "moments of inertia"). For landmark initialisation, salient structures (e.g. corners, line intersections, contours, edges or the like), may be identified in both images and an initial transformation is based upon a best-fit. Choice of optimisers include, for example, Gradient Descent (GD); Gradient Descent Line Search (GDLS); Regular Step Gradient Descent (RSGD); Limited Memory Broyden, Fletcher, Goldfarb, Shannon, Bound-constrained (LMBFGSB), or the like. Examples of similarity metrics include Mean-of-Square Differences (MSD), Correlation Coefficient (CC), Joint Histogram (JH), Mutual Information (MI), Mattes Mutual Information (MMI), and the like.

In one particular example, an affine transform and linear interpolation may be the chosen transformation and interpolator. The optimisers used may include GD, GDLS, RSGD and LMBFGSB, along with a number of different similarity metrics such as any or any combination of MSD, CC, JH with MI and MMI.

Briefly, feature based image registration techniques map features between images. These techniques may comprise stages of feature mapping, transform model estimation, and image resampling and transformation. Some examples also include feature detection in which salient features are either manually or automatically detected in the image pairs. In feature matching, similarity measures and spatial relationships are used to find corresponding features between images. These features may for example comprise characteristic pixel clusters which are seen in both images. In transform model estimation, a mapping transform or mapping function is estimated from corresponding points. Finally, a subject image may be transformed to more closely match the reference images coordinate system, yielding a registered image. In other examples, the full image may not be transformed by the mapping and instead only identified points thereof may be transformed.

Examples of feature-based registration techniques include Scale-Invariant Feature Transform (SIFT), which matches features in images. Feature descriptors are vectors that convey location, scale and orientation, and matching candidates are based on the Euclidean distance of the feature vectors. As the name suggests, SIFT is invariant to scale, making it suitable to find features in images within which common or similar objects have a scaling difference.

Some examples of feature-based registration techniques utilise machine learning. For example, KeyNetAff-NetHardNet, which is a combination of KeyNet, AffNet and HardNet architectures may be used. KeyNet is a keypoint feature detector that combines handcrafted and learned Convolutional Neural Network (CNN) filters within a multi-scale architecture. AffNet is a trained hard negative-constant loss function for learning local affine-covariant regions. HardNet is another local feature descriptor learning loss architecture. One or more feature-matching techniques may be used to refine matches. Example choices include Brute-Force and Fast Library for Approximate Nearest Neighbors (FLANN). Brute-Force is a relatively slow and exhaustive approach that iterates through every keypoint in one image, calculates the distance to every keypoint in the other image, and selects the one with the smallest distance. FLANN is a library for performing fast approximate nearest-neighbour searches in high-dimensional spaces. In some examples, FLANN-matched keypoints may be filtered, for example using Lowe's ratio, to remove ambiguous matches.

Adaptive Locally-Affine Matching (AdaLAM) is a fast and accurate outlier filter based on local affine motion verification with sample-adaptive thresholding. LoFTR (Local Feature Mapping with Transformers) is a detector-less feature-based registration approach to local feature matching that uses a four-stage architecture consisting of a CNN for local feature detection, a coarse level local feature transform that makes coarse matches, a differentiable matching layer, and a coarse-to-fine module to refine the matches.

Whilst SIFT is effectively based on corner detection, KeyNetAffNetHardNet and LoFTR are both "geometry-aware" methods.

Whilst some feature detection or matching methods have relatively low processing requirements (e.g. SIFT feature detection, FLANN feature matching, AdaLAM feature matching), others are computationally expensive (e.g. intensity based registration methods, KeyNetAffNetHardNet feature detection, LoFTR feature matching). In some examples, images may be down sampled in order to reduce the processing resources required.

In a particular example of the method described above, the use of LoFTR proved particularly effective at identifying matching features which survived filtering.

The mapping transformations may be parametric, in which the transformation can be expressed as a single matrix that is applied to all pixels, or non-parametric, in which each pixel may be transformed uniquely. In some examples, affine parametric transformations maybe utilised providing a non-rigid geometric transformation that preserves lines and parallelism but can describe translations, rotations, scaling and shearing. However in other examples, other mapping transformations may be used.

In some examples, the quality of the mapping in block 410 and/or block 414 may be evaluated. For example, a transformed or warped image may be overlaid on the real image, which allows an operator to visually evaluate how realistic the transformation is. In some examples, the transformation may be scored, for example using image difference metrics: Mean-Squared Error, Cross Correlation, Mutual Information Score, Mutual Information Joint Histogram, Structural Similarity Index (SSI), Root Sum-of-Square of Pixel Shift or the like. In some examples, if the transformation is determined not to be of sufficient quality, an alert may be generated, and/or an image may be re-processed, for example using a different algorithm until the required standard is met.

Block 808 comprises using the 2D to 2D mapping determined in block 402 and the 2D to 3D mapping determined in block 802 to map the coordinates of the property identified in block 804 into 3D space. In other words, in block 808, the 2D to 3D mapping and the 2D to 2D mapping are combined. This may for example comprise applying the transformation determined in block 802 and the transformation determined in block 806 to the coordinates identified in block 804.

While a 3D image could be acquired of each element, such images tend to be relatively time-consuming to acquire when compared to 2D images. For example, a single 3D phase measurement capture generally takes around 10 seconds and repositioning a turbine may take around a further 10 seconds. This may mean that providing a full 3D image of a turbine blade may typically take around 30 minutes. In this example, as multiple subject images may be registered to a single 3D image, considerable time may be saved when assessing the turbine as a whole.

Moreover, it will be appreciated that, while a particular order of execution has been set out above, this may be different in different examples. For example, processing may be carried out in parallel; the 2D images may be captured and processed prior to the 3D image; the subject images may be identified after the 2D to 3D mapping has been derived and so on.

Figure 9 is an example of an apparatus 900 comprising processor circuitry 902. The apparatus 900 may provide an example of the apparatus 100, or of the processor circuitry 102. The processor circuitry 902 is described herein in terms of functional modules. However, it will be appreciated that, while various actions are described in the context of each of the modules, they may be implemented on a single processor, or the operations of a single module may be provided on a plurality of processors, or the like. Moreover, the modules may not be distinct from one another in terms of the programming used.

The processor circuitry 902 comprises a data module 904, which is configured to receive data comprising a plurality of image frames of a plurality of shroud gaps of a turbine, wherein the turbine is in different orientations in each of the image frames, and a first reference image of a first shroud gap in a first orientation.

Moreover, in this example the processor circuitry 902 comprises an image processing module 906, which is configured to identify, based on the first reference image, an image frame in which the shroud gap matches the first orientation for each of the plurality of shroud gaps. As noted above, in other examples, the image frames in which the shroud gap matches the first orientation may be identified in some other way. In addition, the image processing module 906 is configured to perform image processing on the identified image frame to identify a first region of the image frame associated with a shroud gap, to combine the identified regions of the image frames to obtain a gap mask and to apply the gap mask to each identified image frame to identify a second region. As described above, while the first region may be indicative a gap + 'other background', the second region may be indicative of the gap within each image frame.

Moreover, the processor circuitry 902 comprises a measurement module 908 which is configured to determine one or more properties associated with at least one shroud gap based on the second region. For example, a maximum spacing and/or a holing may be measured, as described above.

The processor circuitry 902 may be configured to perform any or any combination of the blocks of Fig. 5, 7 or 8, or the methods as described in relation to Fig. 6A-D.

Fig. 10 shows a machine readable medium 1002 and a processor 1004. The machine readable medium 1002 stores instructions which, when executed by a processor cause the processor and/or associated apparatus to carry out any or any combination of the blocks of Fig. 5, 7 or 8, or the methods as described in relation to these Figures and to Fig. 6A-D.

Except where mutually exclusive, any of the features may be employed separately or in combination with any other features and the disclosure extends to and includes all combinations and sub-combinations of one or more features described herein.

**Claims**

1. A computer-implemented method for determining one or more properties associated with at least one shroud gap of a turbine, wherein a shroud gap is a gap between adjacent shrouds of the turbine, the method comprising:

   obtaining (502) a plurality of image frames of shroud gaps of the turbine, wherein the turbine is in a different orientation in each of the image frames, and a first reference image of a first shroud gap in a first orientation;
   for each of a plurality of shroud gaps, identifying (504) an image frame in which an orientation of the shroud gap matches the first orientation;
   performing (506) image processing on the identified image frames to identify a first region of that image frame associated with a shroud gap;
   combining (508) the identified regions of the image frames to obtain a gap mask;
   applying (510) the gap mask on each identified image frame to identify a second region; and
   performing (512) image processing on the second region to determine the one or more properties associated with the at least one shroud gap.

2. The method of claim 1 wherein applying (510) the gap mask to an identified image frame comprises carrying out a logical AND operation between the first region and the gap mask.

3. The method of claim 2 wherein performing (512) image processing on the second region to determine the one or more properties associated with the at least one shroud gap comprises:

   receiving data comprising three-dimensional, 3D, data representing a geometry of at least part of the turbine;
   determining a 2D to 3D mapping between the reference image and the 3D data, wherein locations in the reference image are mapped to locations in 3D space;
   determining a 2D to 2D mapping between the image frame and the reference image; and
   determining a measurement of a property of the shroud gap using the 2D to 2D mapping and the 2D to 3D mapping.

4. The method of any preceding claim, wherein performing (506) image processing on the identified image frames to identify the first region comprises classifying portions of the identified image frame that comprise one or both of a background and the shroud gap as the first region of that image frame.

5. The method of claim 4, comprising using a first machine learning model to classify the portions of the identified image frame.

6. The method of any preceding claim, wherein combining (508) the identified regions of the image frames to obtain a gap mask comprises:

   averaging over the first regions of the identified image frames to obtain an average image frame comprising a background and shroud gap;
   classifying portions of the average image frame that comprise shroud gap; and
   identifying the gap mask based on the portions of the average image frame that represent shroud gap.

7. The method of claim 6, comprising using a second machine learning model to classify the portions of the identified image frame.

8. The method of any preceding claim, comprising capturing the image frames using a camera imaging into the first shroud gap.

9. The method of any preceding claim, wherein, in the first orientation, the first shroud gap is horizontal relative to a camera capturing the image frames.

10. The method of any preceding claim, wherein the one or more properties associated with at least one shroud gap comprise a cumulative shroud holing area for the turbine, wherein shroud holing is a hole that passes through the shroud completely.

11. The method of claim 9 or 10, further comprising:

determining an area of shroud holing for each identified image frame; and
summing the determined area of shroud holing for each identified image frame to obtain the cumulative shroud holing area for the turbine.

12. The method of any preceding claim, wherein the one or more properties associated with the at least one shroud gap comprises a maximum shroud gap of the turbine, wherein the maximum shroud gap is a longest orthogonal distance between nearest edges of any two adjacent shrouds of the turbine.

13. The method of any preceding claim, further comprising:

responsive to determining that at least one of the one or more properties associated with the at least one shroud gap of the turbine fails to satisfy a corresponding criterion, determining that the turbine requires servicing; and issuing to a user an indication that the turbine requires servicing.

14. An apparatus comprising processor circuitry, the processor circuitry being configured to:

receive data comprising a plurality of image frames of a plurality of shroud gaps of a turbine, wherein the turbine is in a different orientation in each of the image frames, and a first reference image of a first shroud gap in a first orientation;
for each of the plurality of shroud gaps, identify an image frame in which the shroud gap matches the first orientation;
perform image processing on the identified image frames to identify a first region of the image frame associated with a shroud gap;
combine the identified regions of the image frames to obtain a gap mask;
apply the gap mask to each identified image frame to identify a second region; and
determine one or more properties associated with at least one shroud gap based on the second region.

15. A machine readable medium storing instructions which, when executed by a processor cause the processor to carry out the method of any of claims 1 to 13.

**Patentansprüche**

1. Computerimplementiertes Verfahren zum Bestimmen einer oder mehrerer Eigenschaften im Zusammenhang mit mindestens einer Mantellücke einer Turbine, wobei eine Mantellücke eine Lücke zwischen benachbarten Mänteln der Turbine ist, wobei das Verfahren Folgendes umfasst:

Erhalten (502) einer Vielzahl von Bild-Frames von Mantellücken der Turbine, wobei sich die Turbine in einer unterschiedlichen Ausrichtung in jedem der Bild-Frames befindet, und eines ersten Referenzbilds einer ersten Mantellücke in einer ersten Ausrichtung;
für jede einer Vielzahl von Mantellücken, Identifizieren (504) eines Bild-Frames, in dem eine Ausrichtung der Mantellücke mit der ersten Ausrichtung übereinstimmt;
Durchführen (506) einer Bildverarbeitung an den identifizierten Bild-Frames, um eine erste Region dieses Bild-Frames zu identifizieren, die mit einer Mantellücke im Zusammenhang steht;
Kombinieren (508) der identifizierten Regionen der Bild-Frames, um eine Lückenmaske zu erhalten;
Anlegen (510) der Lückenmaske an jeden identifizierten Bild-Frame, um eine zweite Region zu identifizieren; und
Durchführen (512) einer Bildverarbeitung an der zweiten Region, um die eine oder mehreren Eigenschaften im Zusammenhang mit der mindestens einen Mantellücke zu bestimmen.

2. Verfahren nach Anspruch 1, wobei das Anlegen (510) der Lückenmaske an einen identifizierten Bild-Frame Umsetzen einer logischen UND-Verknüpfung zwischen der ersten Region und der Lückenmaske umfasst.

3. Verfahren nach Anspruch 2, wobei das Durchführen (512) einer Bildverarbeitung an der zweiten Region, um die eine oder mehreren Eigenschaften im Zusammenhang mit der mindestens einen Mantellücke zu bestimmen, Folgendes umfasst:

Empfangen von Daten, die dreidimensionale Daten, 3D-Daten, umfassen, die eine Geometrie mindestens eines Teils der Turbine darstellen;

Bestimmen einer 2D-3D-Zuordnung zwischen dem Referenzbild und den 3D-Daten, wobei Positionen in dem Referenzbild Positionen in dem 3D-Raum zugeordnet werden;

Bestimmen einer 2D-2D-Zuordnung zwischen dem Bild-Frame und dem Referenzbild; und

Bestimmen einer Messung einer Eigenschaft der Mantellücke unter Verwendung der 2D-2D-Zuordnung und der 2D-3D-Zuordnung.

4. Verfahren nach einem vorhergehenden Anspruch, wobei das Durchführen (506) einer Bildverarbeitung an den identifizierten Bild-Frames, um die erste Region zu identifizieren, Klassifizieren von Abschnitten des identifizierten Bild-Frames, die eines oder beide von einem Hintergrund und der Mantellücke umfassen, als die erste Region dieses Bild-Frames umfasst.

5. Verfahren nach Anspruch 4, umfassend Verwenden eines ersten Modells maschinellen Lernens, um die Abschnitte des identifizierten Bild-Frames zu klassifizieren.

6. Verfahren nach einem vorhergehenden Anspruch, wobei das Kombinieren (508) der identifizierten Regionen der Bild-Frames, um eine Lückenmaske zu erhalten, Folgendes umfasst:

Bilden des Mittelwerts aus den ersten Regionen der identifizierten Bild-Frames, um ein Durchschnitts-Bild-Frame zu erhalten, das einen Hintergrund und eine Mantellücke umfasst;

Klassifizieren von Abschnitten des Durchschnitts-Bild-Frames, die eine Mantellücke umfassen; und

Identifizieren der Lückenmaske basierend auf den Abschnitten des Durchschnitts-Bild-Frames, die eine Mantellücke darstellen.

7. Verfahren nach Anspruch 6, umfassend Verwenden eines zweiten Modells maschinellen Lernens, um die Abschnitte des identifizierten Bild-Frames zu klassifizieren.

8. Verfahren nach einem vorhergehenden Anspruch, umfassend Aufnehmen der Bild-Frames unter Verwendung einer Kamera, die ein Bild in die erste Mantellücke erfasst.

9. Verfahren nach einem vorhergehenden Anspruch, wobei in der ersten Ausrichtung die erste Mantellücke horizontal zu einer Kamera ist, die die Bild-Frames aufnimmt.

10. Verfahren nach einem vorhergehenden Anspruch, wobei die eine oder mehreren Eigenschaften im Zusammenhang mit mindestens einer Mantellücke einen kumulativen Mantellochungsbereich für die Turbine umfassen, wobei die Mantellochung ein Loch ist, das vollständig durch den Mantel verläuft.

11. Verfahren nach Anspruch 9 oder 10, ferner umfassend:

Bestimmen eines Bereichs der Mantellochung für jeden identifizierten Bild-Frame; und

Summieren des bestimmten Bereichs der Mantellochung für jeden identifizierten Bild-Frame, um den kumulativen Mantellochungsbereich für die Turbine zu erhalten.

12. Verfahren nach einem vorhergehenden Anspruch, wobei die eine oder mehreren Eigenschaften im Zusammenhang mit der mindestens einen Mantellücke eine maximale Mantellücke der Turbine umfassen, wobei die maximale Mantellücke ein längster orthogonaler Abstand zwischen nächsten Kanten zweier beliebiger benachbarter Mäntel der Turbine ist.

13. Verfahren nach einem vorhergehenden Anspruch, ferner umfassend:

als Reaktion auf das Bestimmen, dass mindestens eine der einen oder mehreren Eigenschaften im Zusammenhang mit der mindestens einen Mantellücke der Turbine ein entsprechendes Kriterium nicht erfüllt, Bestimmen, dass die Turbine eine Wartung benötigt; und

Ausgeben einer Meldung an einen Benutzer, dass die Turbine eine Wartung benötigt.

14. Vorrichtung, umfassend eine Prozessorschaltung, wobei die Prozessorschaltung zu Folgendem konfiguriert ist:

Empfangen von Daten, die eine Vielzahl von Bild-Frames einer Vielzahl von Mantellücken einer Turbine, wobei sich die Turbine in einer unterschiedlichen Ausrichtung in jedem der Bild-Frames befindet, und ein erstes Referenzbild einer ersten Mantellücke in einer ersten Ausrichtung umfassen;
für jede der Vielzahl von Mantellücken, Identifizieren eines Bild-Frames, in dem die Mantellücke mit der ersten Ausrichtung übereinstimmt;
Durchführen einer Bildverarbeitung an den identifizierten Bild-Frames, um eine erste Region des Bild-Frames zu identifizieren, die mit einer Mantellücke im Zusammenhang steht;
Kombinieren der identifizierten Regionen der Bild-Frames, um eine Lückenmaske zu erhalten;
Anlegen der Lückenmaske an jeden identifizierten Bild-Frame, um eine zweite Region zu identifizieren; und
Bestimmen einer oder mehrerer Eigenschaften im Zusammenhang mit der mindestens einen Mantellücke basierend auf der zweiten Region.

15. Maschinenlesbares Medium, das Anweisungen speichert, die bei Ausführung durch einen Prozessor bewirken, dass der Prozessor das Verfahren nach einem der Ansprüche 1 bis 13 umsetzt.

**Revendications**

1. Procédé mis en œuvre par ordinateur permettant la détermination d'une ou plusieurs propriétés associées à au moins un espace de carénage d'une turbine, dans lequel un espace de carénage est un espace entre des carénages adjacents de la turbine, le procédé comprenant :

   l'obtention (502) d'une pluralité de trames d'image d'espaces de carénage de la turbine, dans lequel la turbine est dans une orientation différente dans chacune des trames d'image, et d'une première image de référence d'un premier espace de carénage dans une première orientation ;
   pour chacun d'une pluralité d'espaces de carénage, l'identification (504) d'une trame d'image dans laquelle une orientation de l'espace de carénage correspond à la première orientation ;
   la réalisation (506) d'un traitement d'image sur les trames d'image identifiées pour identifier une première région de cette trame d'image associée à un espace de carénage ;
   la combinaison (508) des régions identifiées des trames d'image pour obtenir un masque d'espace ;
   l'application (510) du masque d'espace sur chaque trame d'image identifiée pour identifier une seconde région ; et
   la réalisation (512) d'un traitement d'image sur la seconde région pour déterminer l'une ou plusieurs propriétés associées à l'au moins un espace de carénage.

2. Procédé selon la revendication 1, dans lequel l'application (510) du masque d'espace à une trame d'image identifiée comprend la réalisation d'une opération ET logique entre la première région et le masque d'espace.

3. Procédé selon la revendication 2, dans lequel la réalisation (512) d'un traitement d'image sur la seconde région pour déterminer l'une ou plusieurs propriétés associées à l'au moins un espace de carénage comprend :

   la réception de données comprenant des données tridimensionnelles, 3D, représentant une géométrie d'au moins une partie de la turbine ;
   la détermination d'un mappage 2D à 3D entre l'image de référence et les données 3D, dans lequel des emplacements dans l'image de référence sont mappés à des emplacements dans l'espace 3D ;
   la détermination d'un mappage 2D à 2D entre la trame d'image et l'image de référence ; et
   la détermination d'une mesure d'une propriété de l'espace de carénage à l'aide du mappage 2D à 2D et du mappage 2D à 3D.

4. Procédé selon l'une quelconque des revendications précédentes, dans lequel la réalisation (506) d'un traitement d'image sur les trames d'image identifiées pour identifier la première région comprend la classification des parties de la trame d'image identifiée qui comprennent l'un ou les deux d'un arrière-plan et de l'espace de carénage en tant que première région de cette trame d'image.

5. Procédé selon la revendication 4, comprenant l'utilisation d'un premier modèle d'apprentissage automatique pour classifier les parties de la trame d'image identifiée.

6. Procédé selon l'une quelconque des revendications précédentes, dans lequel la combinaison (508) des régions identifiées des trames d'image pour obtenir un masque d'espace comprend :

le moyennage des premières régions des trames d'image identifiées pour obtenir une trame d'image moyenne comprenant un fond et un espace de carénage ;
la classification des parties de la trame d'image moyenne qui comprennent un espace de carénage ; et
l'identification du masque d'espace sur la base des parties de la trame d'image moyenne qui représentent l'espace de carénage.

7. Procédé selon la revendication 6, comprenant l'utilisation d'un second modèle d'apprentissage automatique pour classifier les parties de la trame d'image identifié.

8. Procédé selon l'une quelconque des revendications précédentes, comprenant la capture des trames d'image à l'aide d'une imagerie de caméra dans le premier espace de carénage.

9. Procédé selon l'une quelconque des revendications précédentes, dans lequel, dans la première orientation, le premier espace de carénage est horizontal par rapport à une caméra capturant les trames d'image.

10. Procédé selon l'une quelconque des revendications précédentes, dans lequel l'une ou plusieurs propriétés associées à au moins un espace de carénage comprennent une zone de perforation de carénage cumulative pour la turbine, dans lequel la perforation de carénage est un trou qui traverse complètement le carénage.

11. Procédé selon la revendication 9 ou 10, comprenant en outre :

la détermination d'une zone de perforation de carénage pour chaque trame d'image identifiée ; et
l'addition de la zone déterminée de perforation de carénage pour chaque trame d'image identifiée afin d'obtenir la zone cumulative de perforation de carénage pour la turbine.

12. Procédé selon l'une quelconque des revendications précédentes, dans lequel l'une ou plusieurs propriétés associées à l'au moins un espace de carénage comprennent un espace de carénage maximum de la turbine, dans lequel l'espace de carénage maximum est une distance orthogonale la plus longue entre les bords les plus proches de deux carénages adjacents quelconques de la turbine.

13. Procédé selon l'une quelconque des revendications précédentes, comprenant en outre :

en réponse à la détermination qu'au moins l'une de l'une ou plusieurs propriétés associées à l'au moins un espace de carénage de la turbine ne satisfait pas à un critère correspondant, la détermination que la turbine nécessite un entretien ; et
la délivrance à un utilisateur d'une indication que la turbine nécessite un entretien.

14. Appareil comprenant un ensemble de circuits de processeur, l'ensemble de circuits de processeur étant configuré pour :

recevoir des données comprenant une pluralité de trames d'image d'une pluralité d'espaces de carénage d'une turbine, dans lequel la turbine est dans une orientation différente dans chacune des trames d'image, et une première image de référence d'un premier espace de carénage dans une première orientation ;
pour chacun de la pluralité d'espaces de carénage, identifier une trame d'image dans laquelle l'espace de carénage correspond à la première orientation ;
effectuer un traitement d'image sur les trames d'image identifiées pour identifier une première région de la trame d'image associée à un espace de carénage ;
combiner les régions identifiées des trames d'image pour obtenir un masque d'espace ;
appliquer le masque d'espace à chaque trame d'image identifiée pour identifier une seconde région ; et
déterminer une ou plusieurs propriétés associées à au moins un espace de carénage sur la base de la seconde région.

15. Support de stockage lisible par machine stockant des instructions qui, lorsqu'elles sont exécutées par un processeur amènent le processeur à effectuer le procédé selon l'une quelconque des revendications 1 à 13.

100

106

102

104

105

108

110a

110b

112

*FIG. 1*

200

222
210
216
224

204

226

202

206

208

212  214  218

220

*FIG. 2*

**FIG. 3**

**FIG. 4**

Obtain image frames of shroud gaps, wherein the turbine is in a different orientation in each of the image frames, and 1$^{st}$ reference image of 1$^{st}$ shroud gap in a first orientation — 502

For each shroud gap, identify image frame in which orientation matches the first orientation — 504

Perform image processing on the identified image frames to identify 1$^{st}$ region associated with shroud gap — 506

Combine the identified regions of the image frames to obtain a gap mask — 508

Apply the gap mask on each identified image frame to identify 2$^{nd}$ region — 510

Determine one or more properties associated with at least one shroud gap from 2$^{nd}$ region — 512

*FIG. 5*

**FIG. 6A**

**FIG. 6B**

**FIG. 6C**

608

600

∩

610

## FIG. 6D

| Receive 2D subject image and 3D data representing reference shroud(s) | 702 |
|---|---|
| Determine mapping between 2D image and 3D data | 704 |
| Determine measurement using mapping | 706 |

## FIG. 7

802

| Derive 3D mapping between 2D and 3D reference images |

804

| Identify coordinates of property to be measured in 2D subject image |

806

| Derive 2D mapping between 2D subject image and 2D reference image |

808

| Apply combined 2D and 3D mapping to coordinates |

## FIG. 8

900

902

| Data module 904 | Image processing module 906 |

| Measurement module 908 |

## FIG. 9

1002

MRM

1004

Processor

## FIG. 10

## REFERENCES CITED IN THE DESCRIPTION

**Patent documents cited in the description**

- EP 3324150 A

- EP 3836076 A

**Non-patent literature cited in the description**

- **BENJAMIN STAAR** ; **MICHAEL LÜTJEN** ; **MICHAEL FREITAG**. Anomaly detection with convolutional neural networks for industrial surface inspection. *Procedia CIRP*, 2019, vol. 79, 484-489